# EUROPEAN PATENT APPLICATION

(11) **EP 4 794 427 A1**
(43) Date of publication of application: **19.08.2026**
(21) Application number: 24877248.5
(22) Date of filing: 10.10.2024
(51) Int. Cl.: H04W 72/232, H04W 72/12, H04W 72/231, H04W 72/0457

(54) **TERMINAL AND WIRELESS COMMUNICATION METHOD**

(30) Priority: 11.10.2023 JP 2023175619
(71) Applicant: NTT DOCOMO, INC., Tokyo 100-6150 (JP)
(72) Inventor: OKANO Mayuko, Tokyo 100-6150 (JP); HARADA Hiroki, Tokyo 100-6150 (JP); NAGATA Satoshi, Tokyo 100-6150 (JP)
(74) Representative: Hoffmann Eitle
(86) International application number: PCT/JP2024/036339
(87) International publication number: WO 2025/079654

(57) **Abstract**

A terminal receives single downlink control information instructing scheduling targeting a combination of a plurality of cells, assumes that different field sizes are applied among the plurality of cells targeting a field included in the downlink control information, and assumes that the field is applied when scheduling is performed for a cell for which a higher layer parameter is configured.

## Description

### TECHNICAL FIELD

The present disclosure relates to a terminal and a radio communication method corresponding to a mechanism for scheduling data channels transmitted via a plurality of carriers by single downlink control information transmitted via a specific carrier.

### BACKGROUND ART

The 3rd Generation Partnership Project (3GPP (registered trademark)) has specified the 5th generation mobile communication system (also referred to as 5G, New Radio (NR), or Next Generation (NG)), and is also proceeding with the specification of the next generation called Beyond 5G, 5G Evolution, or 6G.

In 3GPP Release 18, introduction of a function for scheduling PDSCH (Physical Downlink Shared Channel)/PUSCH (Physical Uplink Shared Channel) transmitted via a plurality of component carriers (CCs) by single downlink control information (DCI: Downlink Control Information) is being studied (Non-Patent Literature 1). Such a function is referred to as Single DCI Multi-carrier PDSCH/PUSCH scheduling or Single DCI Multi-Cell PDSCH/PUSCH scheduling (hereinafter, referred to as Single DCI Multi-Cell PDSCH/PUSCH scheduling).

In addition, in order to support such Single DCI Multi-Cell PDSCH/PUSCH scheduling, a format of a single DCI capable of scheduling PDSCH/PUSCH of a plurality of cells (which may be referred to as DCI format 0_3/1_3) has been agreed upon (Non-Patent Literature 2).

Furthermore, classification of fields included in DCI format 0_3/1_3 has also been agreed upon (Non-Patent Literature 3). Specifically, a Type-1 field that is a field common to a plurality of cells, a Type-2 field that is an individual field for each cell, a Type-3 field that can be configured as a common or individual field by explicit configuration, and the like can be provided.

### CITATION LIST

### NON-PATENT LITERATURE

Non-Patent Literature 1: "New WID on Multi-carrier enhancements", RP-213577, 3GPP TSG RAN Meeting #94e, 3GPP, December 2021
Non-Patent Literature 2: "RAN1 Chair's Notes", 3GPP TSG RAN WG1 #109-e, 3GPP, May 2022
Non-Patent Literature 3: "Final Report of 3GPP TSG RAN WG1 #110 v1.0.0", R1-2208321, 3GPP TSG RAN WG1 Meeting #110bis-e, 3GPP, October 2022

### SUMMARY OF INVENTION

However, there is a problem to be further studied regarding the classification of fields included in the above-described DCI format 0_3/1_3. Specifically, the Type-3 field can be configured by a parameter of a Radio Resource Control layer (RRC), but it is also assumed that the parameter is not notified to a terminal (User Equipment, UE). In this case, the UE may not be able to correctly interpret the content of the Type-3 field.

Also, the Type-1 field (specifically, Type-1A field) is a field for notifying a value common to all cells (may be read as CC or BWP: Bandwidth Part), but the field size for each cell may be different. For example, for a specific Type-1A field, there is a possibility that the field size of CC#1/2 is 3 bits, the field size of CC#3 is 4 bits, and so on. The UE may not be able to correctly interpret the content of the Type-1A field that is different among such a plurality of cells (CCs).

Therefore, the following disclosure has been made in view of such circumstances, and an object thereof is to provide a terminal and a radio communication method capable of executing an appropriate operation according to the content of a field included in DCI format 0_3/1_3 in Single DCI Multi-Cell PDSCH/PUSCH scheduling.

One aspect of the present disclosure is a terminal (UE 200) including a reception unit (control signal/reference signal processing unit 240) that receives single downlink control information instructing scheduling targeting a combination of a plurality of cells, and a control unit (control unit 270) that assumes that different field sizes are applied among the plurality of cells targeting any field included in the downlink control information, wherein the control unit assumes that the field is applied when scheduling is performed for a cell for which a higher layer parameter is configured.

### BRIEF DESCRIPTION OF DRAWINGS

[Fig. 1] Fig. 1 is an overall schematic configuration diagram of a radio communication system 10.
[Fig. 2] Fig. 2 is a diagram showing frequency bands used in the radio communication system 10.
[Fig. 3] Fig. 3 is a diagram showing a configuration example of a radio frame, a subframe, and a slot used in the radio communication system 10.
[Fig. 4] Fig. 4 is a functional block configuration diagram of a gNB 100 and a UE 200.
[Fig. 5] Fig. 5 is a diagram showing an example of a scheduling scheme that can be supported by the radio communication system 10.
[Fig. 6] Fig. 6 is a diagram showing an example of classification of DCI fields.
[Fig. 7] Fig. 7 is a diagram showing an example of a communication sequence related to RRC parameters and Single DCI Multi-Cell PDSCH/PUSCH scheduling according to Operation Example 1.
[Fig. 8] Fig. 8 is a diagram showing a configuration example of an information element (ServingCellConfig) including the RRC parameters according to Operation Example 1.
[Fig. 9] Fig. 9 is a diagram showing an example of target DCI fields according to Operation Example 2.
[Fig. 10] Fig. 10 is a diagram showing an example of a hardware configuration of the gNB 100 and the UE 200.
[Fig. 11] Fig. 11 is a diagram showing a configuration example of a vehicle 2001.

### DESCRIPTION OF EMBODIMENTS

Hereinafter, embodiments will be described with reference to the drawings. Note that the same functions and configurations are denoted by the same or similar reference numerals, and description thereof will be omitted as appropriate.

### (1) Overall Schematic Configuration of Radio Communication System

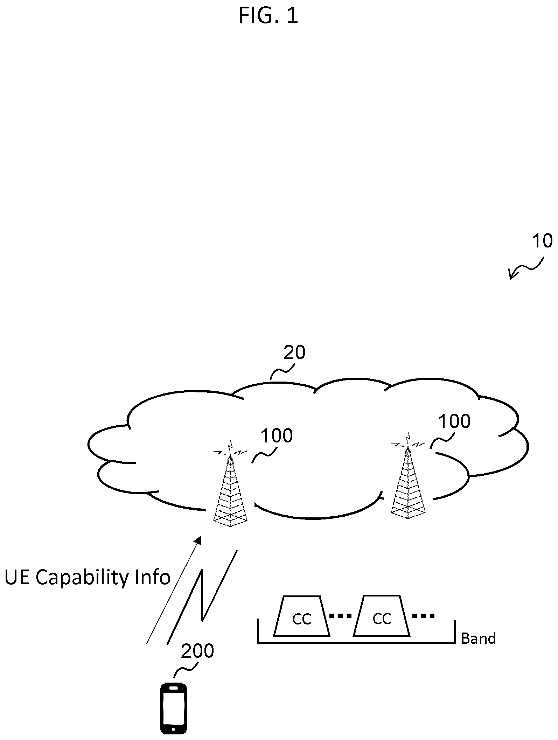

Fig. 1 is an overall schematic configuration diagram of a radio communication system 10 according to the present embodiment. The radio communication system 10 is a radio communication system according to 5G New Radio (NR), and includes a Next Generation-Radio Access Network 20 (hereinafter, NG-RAN 20) and a terminal 200 (User Equipment 200, hereinafter, UE 200).

Note that the radio communication system 10 may be a radio communication system according to a scheme called Beyond 5G, 5G Evolution, or 6G.

The NG-RAN 20 includes a radio base station 100 (hereinafter, gNB 100). Note that the specific configuration of the radio communication system 10 including the numbers of gNBs and UEs is not limited to the example shown in Fig. 1.

The NG-RAN 20 actually includes a plurality of NG-RAN Nodes, specifically, gNBs (or ng-eNBs), and is connected to a core network (5GC, not shown) according to 5G. Note that the NG-RAN 20 and the 5GC may be simply expressed as a "network".

The gNB 100 is a radio base station according to NR, and performs radio communication according to NR with the UE 200. The gNB 100 and the UE 200 can support Massive MIMO that generates a beam with higher directivity by controlling radio signals transmitted from a plurality of antenna elements, carrier aggregation (CA) that uses a plurality of component carriers (CCs) bundled together, dual connectivity (DC) that performs communication simultaneously between the UE and each of two NG-RAN Nodes, and the like.

The type of DC may be Multi-RAT Dual Connectivity (MR-DC) using a plurality of radio access technologies, or may be NR-NR Dual Connectivity (NR-DC) using only NR. Further, the MR-DC may be E-UTRA-NR Dual Connectivity (EN-DC) in which an eNB constitutes a master node (MN) and a gNB constitutes a secondary node (SN), or may be NR-E-UTRA Dual Connectivity (NE-DC) which is the reverse thereof.

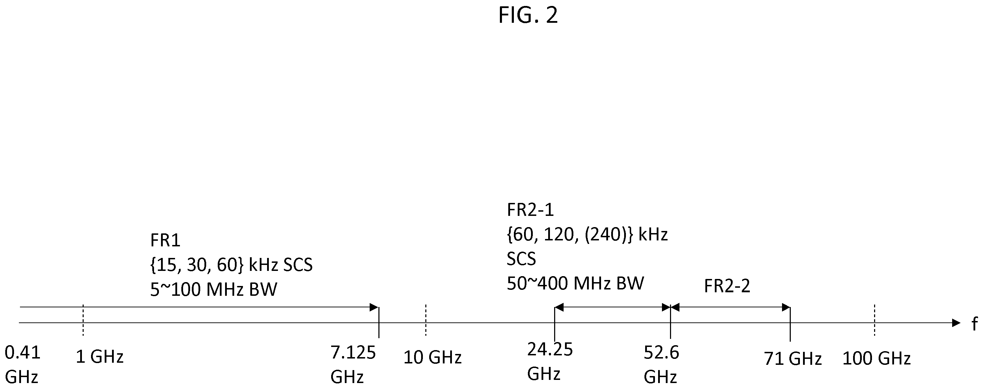

Further, the radio communication system 10 may correspond to a plurality of frequency ranges (FRs). Fig. 2 shows frequency bands used in the radio communication system 10.

- FR1: 410 MHz to 7.125 GHz
- FR2:
   ∘ FR2-1: 24.25 GHz to 52.6 GHz
   ∘ FR2-2: Over 52.6 GHz to 71 GHz

In FR1, Sub-Carrier Spacing (SCS) of 15, 30, or 60 kHz is used, and a bandwidth (BW) of 5 to 100 MHz may be used. FR2 is a higher frequency than FR1, SCS of 60 or 120 kHz (240 kHz may be included) is used, and a bandwidth (BW) of 50 to 400 MHz may be used.

Furthermore, the radio communication system 10 may correspond to a higher frequency band than the frequency band of FR2. Specifically, the radio communication system 10 can correspond to a frequency band exceeding 52.6 GHz and up to 114.25 GHz.

Also, Cyclic Prefix-Orthogonal Frequency Division Multiplexing (CP-OFDM)/Discrete Fourier Transform-Spread (DFT-S-OFDM) having a larger Sub-Carrier Spacing (SCS) may be applied. Furthermore, DFT-S-OFDM may be applied not only to an uplink (UL) but also to a downlink (DL).

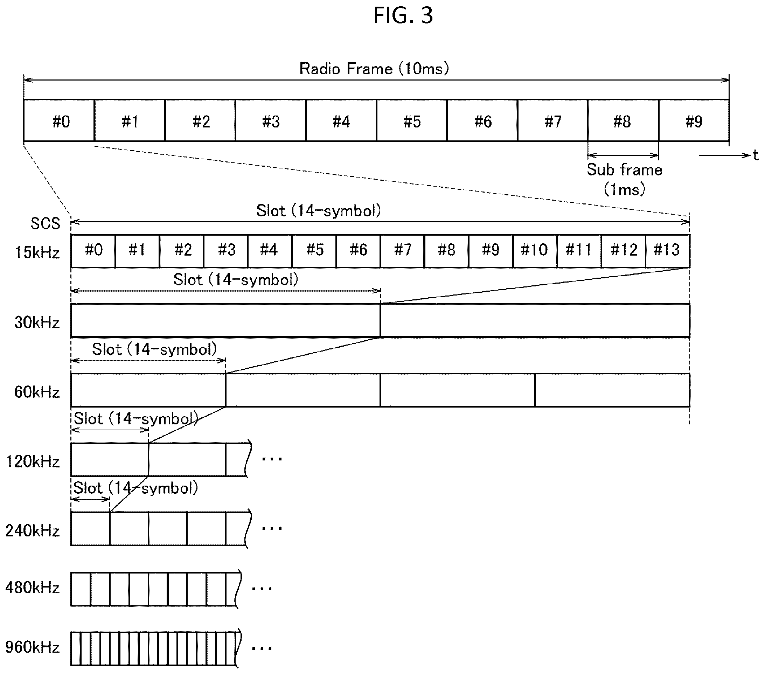

Fig. 3 shows a configuration example of a radio frame, a subframe, and a slot used in the radio communication system 10.

As shown in Fig. 3, one slot is composed of 14 symbols, and the larger (wider) the SCS, the shorter the symbol period (and slot period). Note that the number of symbols constituting one slot does not necessarily have to be 14 symbols (for example, 28, 56 symbols). Further, the number of slots per subframe may vary depending on the SCS. Furthermore, the SCS may be wider than 240 kHz (for example, 480 kHz, 960 kHz as shown in Fig. 3).

Note that the time direction (t) shown in Fig. 3 may be referred to as a time domain, a symbol period, a symbol time, or the like. Further, the frequency direction may be referred to as a frequency domain, a resource block (RB), a resource block group (RBG), a subcarrier, a BWP (Bandwidth part), or the like.

In the radio communication system 10, functions related to a plurality of carriers (specifically, CCs) may be extended as described above. Specifically, in the radio communication system 10, a function of scheduling PDSCH (Physical Downlink Shared Channel)/PUSCH (Physical Uplink Shared Channel) transmitted via a plurality of slots by single downlink control information (DCI: Downlink Control Information) (single DCI multi-slot PDSCH/PUSCH scheduling) may be supported.

Specifically, in the radio communication system 10, a scheduling scheme in which a scheduling DCI and a channel to be scheduled are on the same CC (self-carrier scheduling), a cross-carrier scheduling scheme in which scheduling of a channel across a plurality of CCs is applied (cross carrier scheduling), and a scheduling scheme in which channels are allocated to a plurality of different CCs by a single DCI, that is, one DCI (multi-carrier scheduling) may be supported.

More specifically, in the radio communication system 10, a function of scheduling PDSCH/PUSCH transmitted via a plurality of CCs by a single DCI (Single DCI Multi-carrier PDSCH/PUSCH scheduling or Single DCI Multi-Cell PDSCH/PUSCH scheduling) may be supported. Hereinafter, it is described as Single DCI Multi-Cell PDSCH/PUSCH scheduling.

Only one of single DCI multi-slot PDSCH/PUSCH scheduling and Single DCI Multi-Cell PDSCH/PUSCH scheduling may be available, and both may not be able to be used simultaneously, but in the radio communication system 10, simultaneous use of both may be supported.

Further, in the radio communication system 10, in order to support such Single DCI Multi-Cell PDSCH/PUSCH scheduling, a format of a single DCI capable of scheduling PDSCH/PUSCH of a plurality of cells (which may be referred to as DCI format 0_3/1_3) may be used. By using DCI according to the DCI format, it becomes possible to simultaneously schedule a plurality of cells included in a combination of a plurality of cells (Set of cells).

DCI format 0_3/1_3 may include the following types of fields:
- Type-1 field
   ∘ Type-1A field: A single field indicating information common to all co-scheduled cells
   ∘ Type-1B field: A single field indicating individual information for each of the co-scheduled cells via joint indication
   ∘ Type-1C field: A single field indicating information for only one of the co-scheduled cells
- Type-2 field: An individual field for each co-scheduled cell
- Type-3 field: A common field, an individual field for each of the co-scheduled cells, or an individual field for each subgroup, depending on explicit configuration.

### (2) Functional Block Configuration of Radio Communication System

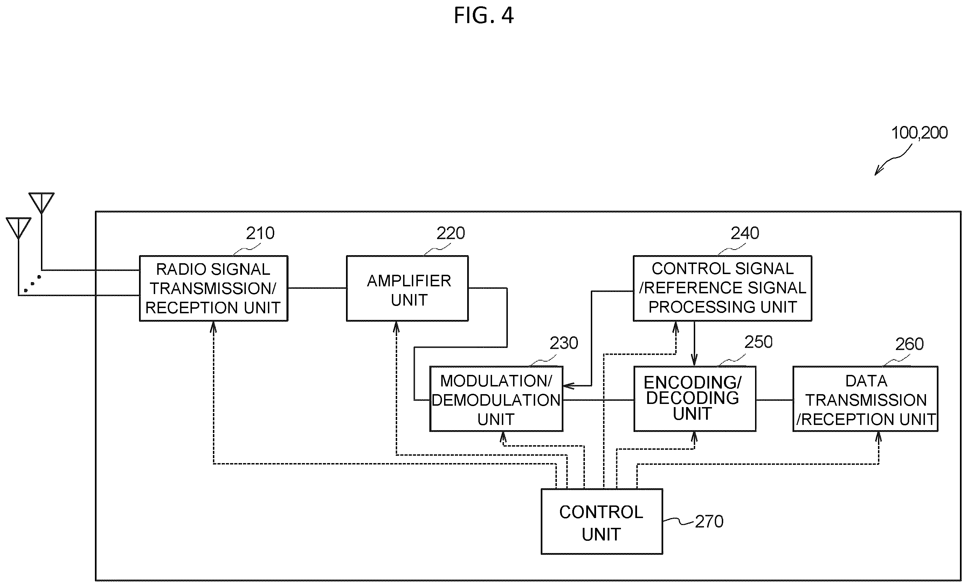

Next, a functional block configuration of the radio communication system 10 will be described. Specifically, a functional block configuration of the UE 200 will be described. Fig. 4 is a functional block configuration diagram of the gNB 100 and the UE 200.

As shown in Fig. 4, the UE 200 includes a radio signal transmission/reception unit 210, an amplifier unit 220, a modulation/demodulation unit 230, a control signal/reference signal processing unit 240, an encoding/decoding unit 250, a data transmission/reception unit 260, and a control unit 270.

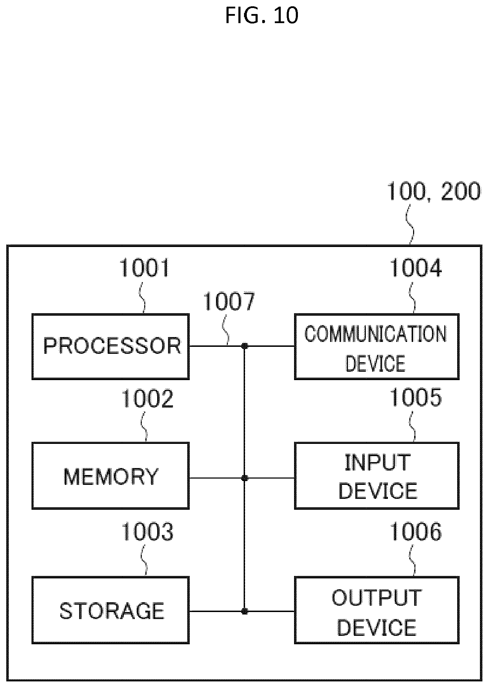

Note that Fig. 4 shows only main functional blocks related to the description of the embodiment, and it should be noted that the UE 200 (gNB 100) has other functional blocks (for example, a power supply unit, etc.). Further, Fig. 4 shows a functional block configuration of the UE 200, and for a hardware configuration, refer to Fig. 10.

The radio signal transmission/reception unit 210 transmits and receives radio signals according to NR. The radio signal transmission/reception unit 210 can support Massive MIMO that generates a beam with higher directivity by controlling radio (RF) signals transmitted from a plurality of antenna elements, carrier aggregation (CA) that uses a plurality of component carriers (CCs) bundled together, dual connectivity (DC) that performs communication simultaneously between the UE and each of two NG-RAN Nodes, and the like.

The amplifier unit 220 is composed of a PA (Power Amplifier)/LNA (Low Noise Amplifier) and the like. The amplifier unit 220 amplifies a signal output from the modulation/demodulation unit 230 to a predetermined power level. Further, the amplifier unit 220 amplifies an RF signal output from the radio signal transmission/reception unit 210.

The modulation/demodulation unit 230 executes data modulation/demodulation, transmission power setting, resource block allocation, and the like for each predetermined communication destination (gNB 100, etc.). In the modulation/demodulation unit 230, Cyclic Prefix-Orthogonal Frequency Division Multiplexing (CP-OFDM)/Discrete Fourier Transform-Spread (DFT-S-OFDM) may be applied. Further, DFT-S-OFDM may be used not only for an uplink (UL) but also for a downlink (DL).

The control signal/reference signal processing unit 240 executes processing related to various control signals transmitted and received by the UE 200 and processing related to various reference signals transmitted and received by the UE 200.

Specifically, the control signal/reference signal processing unit 240 receives various control signals transmitted from the gNB 100 via a predetermined control channel, for example, control signals of a Radio Resource Control layer (RRC). Further, the control signal/reference signal processing unit 240 transmits various control signals to the gNB 100 via a predetermined control channel.

The control signal/reference signal processing unit 240 executes processing using reference signals (RS) such as a Demodulation Reference Signal (DMRS) and a Phase Tracking Reference Signal (PTRS).

The DMRS is a UE-specific reference signal (pilot signal) known between a base station and a terminal for estimating a fading channel used for data demodulation. The PTRS is a UE-specific reference signal for the purpose of estimating phase noise which becomes a problem in a high frequency band.

Note that the reference signal may include a Channel State Information-Reference Signal (CSI-RS), a Sounding Reference Signal (SRS), and a Positioning Reference Signal (PRS) for position information, in addition to the DMRS and the PTRS.

Further, the channel includes a control channel and a data channel. The control channel may include a PDCCH (Physical Downlink Control Channel), a PUCCH (Physical Uplink Control Channel), a RACH (Random Access Channel), Downlink Control Information (DCI) including a Random Access Radio Network Temporary Identifier (RA-RNTI), a Physical Broadcast Channel (PBCH), and the like.

Further, the data channel includes a PDSCH, a PUSCH, and the like. Data may mean data transmitted via the data channel.

The control signal/reference signal processing unit 240 can receive downlink control information (DCI) transmitted from the network. Specifically, the control signal/reference signal processing unit 240 can receive DCI according to a DCI format defined in 3GPP TS38.212. In particular, in the present embodiment, UL and DL scheduling DCI can be received. More specifically, the control signal/reference signal processing unit 240 may receive DCI according to DCI format 0_0, 0_1, 0_2, 1_0, 1_1, 1_2.

Furthermore, in the present embodiment, the control signal/reference signal processing unit 240 may receive DCI according to DCI format 0_3, 1_3 for Single DCI Multi-Cell PDSCH/PUSCH scheduling. That is, the control signal/reference signal processing unit 240 can receive single downlink control information instructing scheduling targeting a combination of a plurality of cells. In the present embodiment, the control signal/reference signal processing unit 240 may constitute a reception unit.

DCI format 0_0, 0_1, 0_2, 0_3 may be interpreted as a UL scheduling grant (grant). DCI format 1_0, 1_1, 1_2, 1_3 may be interpreted as a DL scheduling assignment (assignment).

The control signal/reference signal processing unit 240 may receive DCI corresponding to single DCI multi-slot PDSCH/PUSCH scheduling and DCI corresponding to Single DCI Multi-Cell PDSCH/PUSCH scheduling.

Specifically, regarding single DCI multi-slot PDSCH/PUSCH scheduling, the control signal/reference signal processing unit 240 can receive a single (one) DCI for scheduling channels transmitted via a plurality of slots. Further, regarding Single DCI Multi-Cell PDSCH/PUSCH scheduling, the control signal/reference signal processing unit 240 can receive a single (one) DCI for scheduling channels transmitted via a plurality of carriers.

Here, the channel may include the above-described control channel and data channel, and the uplink direction and the downlink direction are not particularly limited either, but typically, it may mean at least either PDSCH or PUSCH. The carrier may mean a component carrier (CC), or may be simply interpreted as a carrier or subcarrier.

Further, the control signal/reference signal processing unit 240 may transmit capability information of the UE 200 to the network. In particular, in the present embodiment, the control signal/reference signal processing unit 240 can transmit UE Capability Information (terminal capability information, see Fig. 1) related to scheduling to the gNB 100.

The control signal/reference signal processing unit 240 may transmit terminal capability information including terminal capability (UE Capability) related to scheduling of the UE 200.

The control signal/reference signal processing unit 240 can transmit terminal capability information related to scheduling targeting a combination of a plurality of cells (Set of cells) by DCI for Single DCI Multi-Cell PDSCH/PUSCH scheduling (DCI format 0_3/1_3). Details of the terminal capability included in the terminal capability information will be described later, but terminal capability regarding the number of scheduling cells to which the DCI is transmitted and/or the number of scheduled cells scheduled by the DCI may be included.

Further, the control signal/reference signal processing unit 240 may report the terminal capability information every time it is used in the scheduling cell and the scheduled cell.

The encoding/decoding unit 250 executes division/concatenation of data, channel coding/decoding, and the like for each predetermined communication destination (gNB 100 or another gNB).

Specifically, the encoding/decoding unit 250 divides data output from the data transmission/reception unit 260 into a predetermined size, and executes channel coding on the divided data. Further, the encoding/decoding unit 250 decodes data output from the modulation/demodulation unit 230, and concatenates the decoded data.

The data transmission/reception unit 260 executes transmission and reception of Protocol Data Unit (PDU) and Service Data Unit (SDU). Specifically, the data transmission/reception unit 260 executes assembly/disassembly of PDU/SDU in a plurality of layers (Medium Access Control layer (MAC), Radio Link Control layer (RLC), Packet Data Convergence Protocol layer (PDCP), etc.). Further, the data transmission/reception unit 260 executes error correction and retransmission control of data based on Hybrid ARQ (Hybrid automatic repeat request).

The control unit 270 controls each functional block constituting the UE 200. In particular, in the present embodiment, the control unit 270 controls transmission or reception of a channel (for example, PDSCH/PUSCH, the same applies hereinafter) based on DCI for single DCI multi-slot PDSCH/PUSCH scheduling.

Further, the control unit 270 controls transmission or reception of a channel based on DCI for Single DCI Multi-Cell PDSCH/PUSCH scheduling.

Thus, the control unit 270 may control transmission or reception of a channel based on at least either DCI for single DCI multi-slot PDSCH/PUSCH scheduling or DCI for Single DCI Multi-Cell PDSCH/PUSCH scheduling. Further, single DCI multi-slot PDSCH/PUSCH scheduling and Single DCI Multi-Cell PDSCH/PUSCH scheduling may be used simultaneously, and the control unit 270 may execute control based on both scheduling DCIs simultaneously in parallel.

The control unit 270 may apply different configurations to at least any of a cell, a slot, or a channel scheduled by DCI for single DCI multi-slot PDSCH/PUSCH scheduling and DCI for Single DCI Multi-Cell PDSCH/PUSCH scheduling. The cell type (Primary Cell (PCell), Primary Secondary Cell (PSCell), and Secondary Cell (SCell)) does not have to be particularly limited, and a cell group (Master or Secondary) may be targeted. The channel type is also not particularly limited, and may be in the UL direction or the DL direction, but here, PDSCH/PUSCH may be targeted.

Note that a plurality of cells simultaneously scheduled by the DCI may be referred to as co-scheduled cells.

Further, the control unit 270 may control a transmission (reporting) method of UE Capability Information (terminal capability information) transmitted to the network based on at least either a subcarrier spacing (SCS) of the scheduling cell or an SCS of the scheduled cell.

For example, when the SCS of the scheduling cell and the SCS of the scheduled cell (which may include a co-scheduled cell) are the same, the control unit 270 can cause the control signal/reference signal processing unit 240 to transmit UE Capability Information including the number of supportable scheduled cells depending on whether or not the scheduling cell is included in the combination of a plurality of cells (Set of cells).

Further, the control unit 270 may execute a specific configuration for a specific field independent of a higher layer parameter instructing a field type, targeting any field (herein referred to as a specific field) included in DCI for Single DCI Multi-Cell PDSCH/PUSCH scheduling (DCI format 0_3/1_3).

The specific field is not particularly limited, but here, Antenna port, SRS resource indicator, precoding information and number of MIMO layers may be assumed. Typically, RRC may be assumed as the higher layer parameter. Specifically, it may be an RRC parameter (antennaPortsDCI0-3 / antennaPortsDCI1-3 / sri-DCI0-3 / tpmi-DCI0-3) that designates (notifies) whether the specific field described above is a Type-1A field or a Type-2 field.

The control unit 270 may assume that the RRC parameter (antennaPortsDCI0-3 / antennaPortsDCI1-3 / sri-DCI0-3 / tpmi-DCI0-3) is always configured by the network (gNB). Note that the RRC parameter does not necessarily have to be configured, and the control unit 270 may apply a default configuration (Type-1A field or Type-2 field) when the RRC parameter is not configured.

Alternatively, the control unit 270 may determine presence or absence of a specific field based on presence or absence of a higher layer parameter instructing a field type, targeting the specific field included in DCI for Single DCI Multi-Cell PDSCH/PUSCH scheduling (DCI format 0_3/1_3). Specifically, the control unit 270 may determine presence or absence of the specific field according to presence or absence of configuration of the RRC parameter (antennaPortsDCI0-3 / antennaPortsDCI1-3 / sri-DCI0-3 / tpmi-DCI0-3) (whether or not the RRC parameter is absent). If there is configuration of the RRC parameter, presence of the specific field may be affirmed, and if there is no configuration of the RRC parameter, it may be assumed that the specific field is not included in the DCI for Single DCI Multi-Cell PDSCH/PUSCH scheduling (0 bits).

Further, the control unit 270 may assume that a common field size is applied among a plurality of cells, targeting a specific field included in DCI for Single DCI Multi-Cell PDSCH/PUSCH scheduling (DCI format 0_3/1_3). For example, the control unit 270 may assume that the DCI field size is the same among a plurality of cells (may be read as BWPs, etc.), targeting a specific field of the Type-1A field included in DCI format 0_3/1_3. In other words, the control unit 270 does not have to assume that the DCI field size is different among a plurality of cells (BWPs of each cell), targeting the specific field.

Alternatively, the control unit 270 may assume that different field sizes are applied among a plurality of cells, targeting a specific field included in DCI for Single DCI Multi-Cell PDSCH/PUSCH scheduling (DCI format 0_3/1_3). Here, when the field size of a part of the specific fields is larger than the field size of other specific fields, the control unit 270 may interpret a part of upper bits (MSB: most significant bit) or lower bits (LSB: least significant bit) of the part of the specific fields as content of the other specific fields.

For example, when the field size of a part of the specific fields is 4 bits and the field size of other specific fields is 3 bits, the control unit 270 may interpret a part of information of 4 bits (MSB or LSB) as information of 3 bits. Note that a more specific example of interpretation will be described later.

Further, the control unit 270 may assume that the specific field is applied when scheduling is performed for a cell for which a parameter of a higher layer (for example, RRC) is configured.

Alternatively, the control unit 270 may assume that application of the specific field is excluded when scheduling is performed for a cell for which a parameter of a higher layer (for example, RRC) is not configured. That is, the specific field does not have to be applied, and the control unit 270 may ignore the specific field.

Note that the control unit 270 may assume that the specific field is applied when scheduling is performed for a combination of cells for which parameters of a higher layer (for example, RRC) are configured.

Further, the gNB 100 may include functions corresponding to the above-described UE 200. Specifically, the gNB 100 (control signal/reference signal processing unit 240) may constitute a first transmission unit that transmits downlink control information instructing scheduling targeting a combination of a plurality of cells to a terminal, and a second transmission unit that transmits a message including a higher layer parameter instructing a field type targeting a specific field included in the downlink control information to the terminal, and the like.

### (3) Operation of Radio Communication System

Next, the operation of the radio communication system 10 will be described. Specifically, the operation regarding specific fields of Single DCI Multi-Cell PDSCH/PUSCH scheduling will be described.

### (3.1) Premise and Issues

As described above, in the radio communication system 10, a function of scheduling PDSCH/PUSCH of a plurality of CCs by a single (one) DCI (Single DCI Multi-Cell PDSCH/PUSCH scheduling) may be supported.

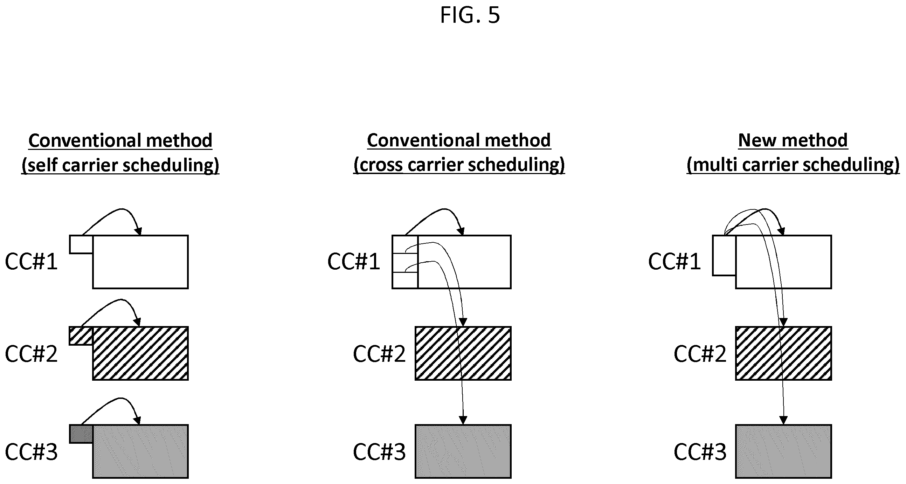

Fig. 5 shows an example of a scheduling scheme that can be supported by the radio communication system 10. Single DCI Multi-Cell PDSCH/PUSCH scheduling (Single DCI Multi-carrier PDSCH/PUSCH scheduling) has the following features compared to a scheme in which a DCI is prepared for each CC and scheduled one by one (conventional scheme).

- (Advantage): Load due to DCI (PDCCH) monitoring (number of blind decodes (BDs)) can be reduced. Also, total PDCCH overhead can be reduced (more effective as Single DCI size is smaller than conventional DCI x number of CCs).
- (Disadvantage): Indication content cannot be changed finely for each CC (if made possible, Single DCI size increases, and PDCCH error rate and overhead increase). If PDCCH is erroneous, data reception of the entire plurality of CCs fails.

In the case of DCI format 0_3/1_3, a plurality of field types (Type 1A, 1B, 1C, 2, 3) can be defined as described above, but it is important which DCI field is applied commonly among CCs (may be read as cells or BWPs, etc.) and which DCI field is applied for each CC, which is a trade-off between flexibility of configuration and performance.

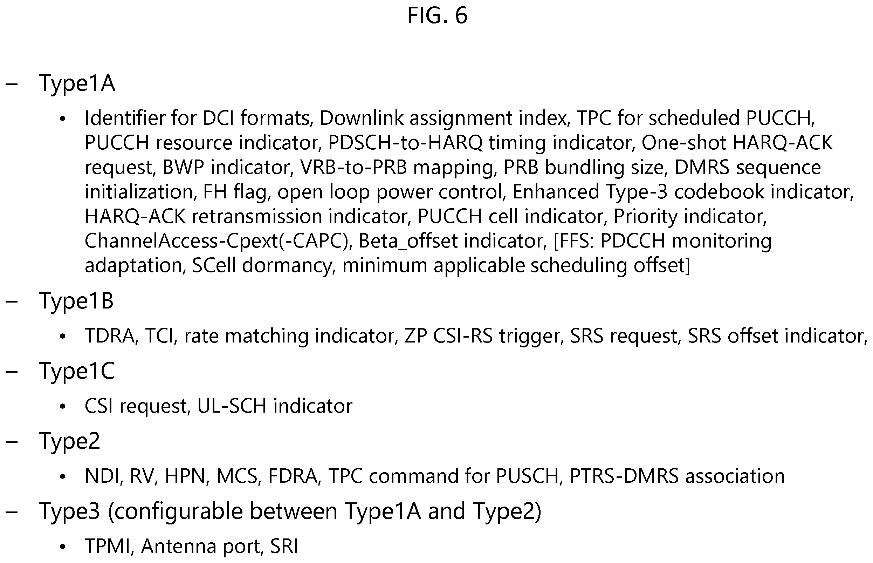

Fig. 6 shows an example of classification of DCI fields. As shown in Fig. 6, DCI fields belonging to field types of Type 1A, 1B, 1C, 2, 3 have been agreed upon.

Here, regarding the Type-3 field (configurable field), whether to operate as a Type-1A field or a Type-2 field can be notified to the UE using an RRC parameter. For example, the following fields are cited.

- Antenna port field configuration: antennaPortsDCI0-3 / antennaPortsDCI1-3
- SRI (SRS resource indicator) field configuration: sri-DCI0-3
- TPMI (Transmitted Precoding Matrix Indicator) field configuration: tpmi-DCI0-3

Notification by an RRC parameter is a premise for the field, but if the RRC parameter is not notified, the UE cannot determine the field type (Type-1A field or Type-2 field) of the field, and there is a possibility that the content of the Type-3 field cannot be correctly interpreted (Issue 1).

Further, it has been agreed that the field size (DCI field size) of the Type-1A field of DCI format 0_3/1_3 is determined as the maximum field size of the Active BWP of all cells in the Set of cells.

While the Type-1A field is a field for notifying a value common to all cells (BWPs), the DCI field size targeting each cell (BWP) may be different from the field for notifying a value common to all cells.

For example, regarding a specific Type-1A field, when 3 bits are used in CC#1/2 and 4 bits are used in CC#3, the DCI field size of the Type-1A field included in DCI format 0_3/1_3 is 4 bits, which is the maximum value. On the other hand, for CC#1/2, only 3 bits are required, and there is a possibility that the UE cannot correctly interpret the information of 4 bits. Also, when the number of bits is different for each cell, whether or not to allow operation as a Type-1A field, and if allowed, there is a possibility that the UE cannot interpret correctly (Issue 2).

### (3.2) Operation Example 1

This operation example can solve the above-described (Issue 1). Regarding the DCI field included in DCI format 0_3/1_3, specifically, the RRC parameter (antennaPortsDCI0-3 / antennaPortsDCI1-3 / sri-DCI0-3 / tpmi-DCI0-3) for notifying whether to be a Type-1A field or a Type-2 field for Antenna port, SRS resource indicator, precoding information and number of MIMO layers, the UE may operate according to any of the following.

- The UE determines the presence or absence of the DCI field independently of the presence or absence of configuration of antennaPortsDCI0-3 / antennaPortsDCI1-3 / sri-DCI0-3 / tpmi-DCI0-3 (whether or not the RRC parameter is absent).
   ∘ (Alt.1): The UE assumes that antennaPortsDCI0-3 / antennaPortsDCI1-3 / sri-DCI0-3 / tpmi-DCI0-3 is always configured.

Specifically, if the DCI field is 1 bit or more (if present), the UE may assume that it is always configured. Also, if the DCI field size is 0 bits (no configuration), the UE may ignore the configuration of antennaPortsDCI0-3 / antennaPortsDCI1-3 / sri-DCI0-3 / tpmi-DCI0-3.

∘ (Alt.2): The UE assumes that antennaPortsDCI0-3 / antennaPortsDCI1-3 / sri-DCI0-3 / tpmi-DCI0-3 does not have to be configured, and a default configuration (Type-1A field or Type-2 field) when not configured is specified by the 3GPP specification.

Note that the Type-2 field may be the default configuration (due to basic feature).
- The UE determines the presence or absence of the DCI field from the presence or absence of configuration of antennaPortsDCI0-3 / antennaPortsDCI1-3 / sri-DCI0-3 / tpmi-DCI0-3 (whether or not the RRC parameter is absent).

If antennaPortsDCI0-3 / antennaPortsDCI1-3 / sri-DCI0-3 / tpmi-DCI0-3 is not configured, the UE may assume that the DCI field is not included in the DCI (0 bits).

Further, different alternatives among Alt 1 and 2 described above may be applied to each of Antenna port, SRS resource indicator, precoding information and number of MIMO layers.

If ScheduledCellListDCI-0-3 is not configured, at least any of antennaPortsDCI0-3 / sri-DCI0-3 / tpmi-DCI0-3 does not have to be configured. That is, if ScheduledCellListDCI-0-3 is configured, at least any of antennaPortsDCI0-3 / sri-DCI0-3 / tpmi-DCI0-3 may be always configured.

If ScheduledCellListDCI-1-3 is not configured, antennaPortsDCI1-3 does not have to be configured. That is, if ScheduledCellListDCI-1-3 is configured, antennaPortsDCI1-3 may be always configured.

If the UE supports only operation with the Type-2 field and does not report support for operation of the Type-1A field (FG (Feature Group) 49-4c), antennaPortsDCI0-3 / sri-DCI0-3 / tpmi-DCI0-3 does not have to be configured (the UE may assume operation with the Type-2 field).

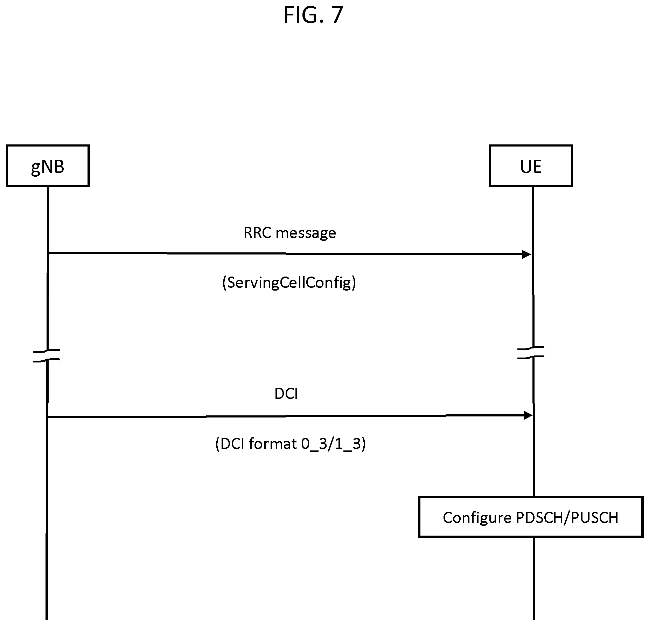

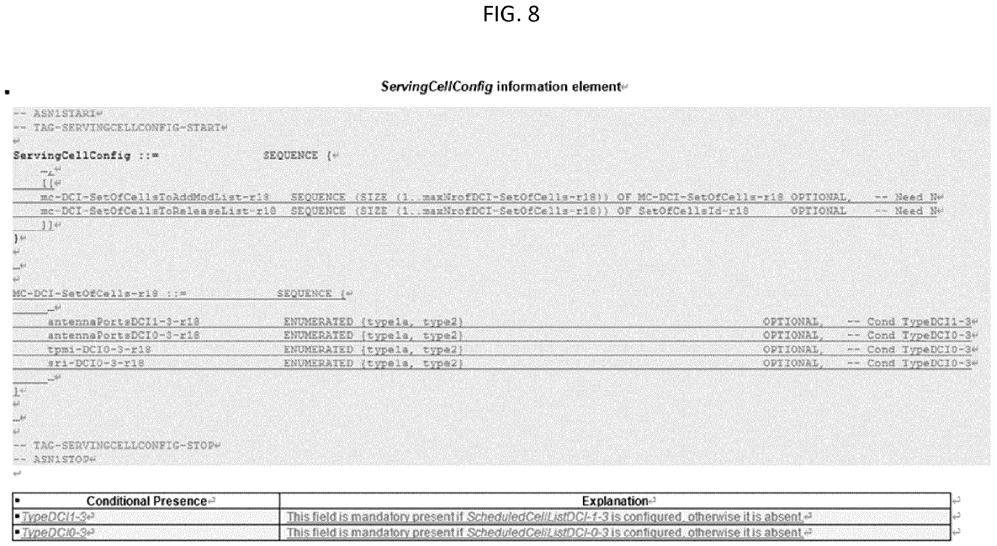

Fig. 7 shows an example of a communication sequence related to RRC parameters and Single DCI Multi-Cell PDSCH/PUSCH scheduling according to Operation Example 1. Fig. 8 shows a configuration example of an information element (ServingCellConfig) including the RRC parameters according to Operation Example 1.

As shown in Fig. 7, the network (gNB) may transmit an RRC message including ServingCellConfig to the UE. The type of the RRC message is not particularly limited as long as it is an RRC layer message including ServingCellConfig.

Further, the gNB may transmit DCI according to DCI format 0_3/1_3 (Single DCI Multi-Cell PDSCH/PUSCH scheduling) to the UE. The UE may determine the field type and/or field size of the specific field included in the received DCI, and configure PDSCH and/or PUSCH.

As shown in Fig. 8, ServingCellConfig may include information indicating the field type of antennaPortsDCI0-3 / antennaPortsDCI1-3 / sri-DCI0-3 / tpmi-DCI0-3 described above.

According to this operation example, regarding the RRC parameter (antennaPortsDCI0-3 / antennaPortsDCI1-3 / sri-DCI0-3 / tpmi-DCI0-3) for notifying whether to be a Type-1A field or a Type-2 field for Antenna port, SRS resource indicator, precoding information and number of MIMO layers, the UE can operate according to any of the above, so that the content of the Type-3 field can be correctly interpreted regardless of the presence or absence of notification of the RRC parameter. Thereby, the UE can execute an appropriate operation according to the content of the field included in DCI format 0_3/1_3 in Single DCI Multi-Cell PDSCH/PUSCH scheduling.

### (3.3) Operation Example 2

This operation example can solve the above-described (Issue 2). Regarding the Type-1A field (target DCI field is described later) included in DCI format 0_3/1_3, the UE may operate according to any of the following.

- (Opt.1): The UE does not assume that the DCI field size is different among cells (among BWPs of each cell). That is, the UE may assume that the DCI field size is the same among cells.
- (Opt.2): The UE assumes that the DCI field size is different among cells (among BWPs of each cell).
   ∘ (Opt.2-1): If the bit size of the Type1A field is larger than the number of bits configured in the cell (BWP), the UE interprets only MSB or LSB required as the number of bits configured in the cell (BWP) as the field for the cell (BWP).
   ∘ (Opt.2-2): If a value not supported is notified, the UE ignores the notification by the field or applies a default operation.
   ∘ (Opt.2-3): The UE assumes that the DCI field is applied only when scheduled for a cell (combination of cells) for which a specific RRC parameter is configured.

When scheduled for a cell (including a combination of cells) for which a specific RRC parameter is not configured, the UE may assume that the DCI field is not applied (ignored).

Note that it may be assumed that the DCI field is applied only when scheduled for a cell (combination of cells) for which a specific RRC parameter is not configured. When scheduled for a cell (including a combination of cells) for which a specific RRC parameter is configured, the UE may assume that the DCI field is not applied (ignored).

The UE may transmit UE Capability Information indicating whether or not to support one or both of Opt.1 and Opt.2 (including 2-1 to 2-3) described above to the network.

Opt.1 or Opt.2 described above may be applied to all cells included in the Set of cells scheduled by DCI format 0_3/1_3, or may be applied only to co-scheduled cells actually scheduled by the DCI format (cells notified by Scheduled cells indicator or FDRA (Frequency Domain Resource Allocation) field in the DCI format). In a cell (BWP) that is not actually scheduled, the UE may apply a default operation, and in a cell (BWP) that is actually scheduled, the UE may interpret the field based on only necessary MSB or LSB as described above.

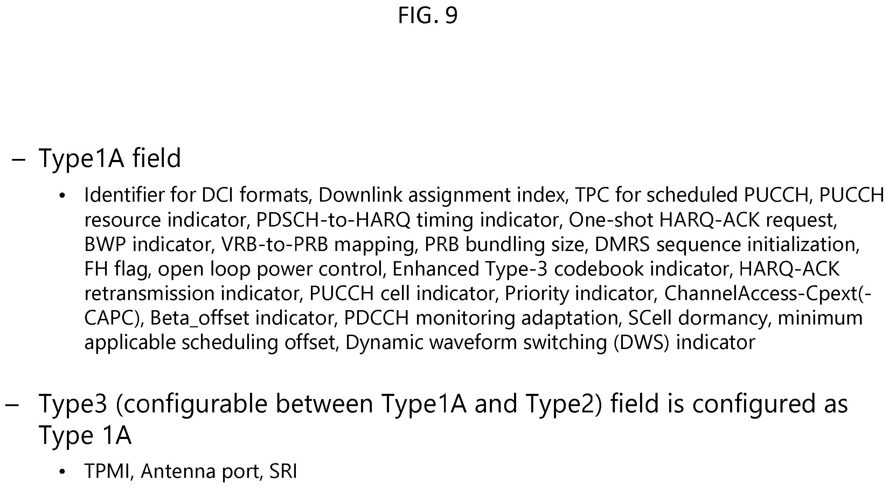

Fig. 9 shows an example of target DCI fields according to Operation Example 2. As the Type-1A field and Type-3 field (when configured as Type-1A field) included in DCI format 0_3/1_3, the DCI fields shown in Fig. 9 may be targeted for the operation described above.

Note that at least any of the DCI fields shown in Fig. 9 may be targeted, or a different Option (Opt.1 or Opt.2) may be applied for each DCI field shown in Fig. 9.

Next, an application example (example of parameters whose number of bits may change) regarding the DCI field shown in Fig. 9 will be described.

- BWP indicator
   ∘ (Opt.1): The UE assumes that the number of UL/DL BWPs configured for each cell included in the Set of cells is the same.
   ∘ (Opt.2): If a BWP index larger than the number of BWPs configured in the cell is designated, the UE may ignore the notification by this field for the cell, interpret that the default BWP is designated, or interpret only LSB or MSB corresponding to the number of BWPs for the cell, or apply the notification by this field only when scheduled for a cell (combination of cells) having the same number of configured BWPs.
- SRS resource indicator (SRI)
   ∘ (Opt.1): The UE assumes that the number of bits of SRI configured for each cell included in the Set of cells is the same.

The UE may assume that the number of SRS resources configured for each cell included in the Set of cells, the maximum number of MIMO layers, and the configuration of txConfig (transmission configuration) are the same among cells.

∘ (Opt.2): If a value larger than the SRI index configured in the cell (BWP) is designated, the UE (i) ignores the notification by this field for the cell, (ii) refers to a provision (notification) of an SRI table (any of 3GPP TS38.212 table 7.3.1.1.2-28/29/30/31/32/32A/32B) to be referred to by default, (iii) interprets that a default configuration is specified by the 3GPP specification and the configuration is designated by a higher layer, (iv) interprets only LSB or MSB corresponding to the number of SRI indexes for the cell, or (v) may apply the notification by this field only when scheduled for a cell (combination of cells) in which at least any one of the number of SRS resources configured for each cell included in scheduling cell/set of cells, the maximum number of MIMO layers, the configuration of txConfig, and the referred SRI table is the same.

- TPMI
   ∘ (Opt.1): The UE assumes that the number of bits of TPMI configured for each cell included in the Set of cells is the same.

The UE may assume that the number of Antenna ports configured for each cell included in the Set of cells, ul-FullPowerTransmission, configuration of transform precoder, maxRank, codebookSubset, and configuration of txConfig are the same among cells.

∘ (Opt.2): If a value larger than the TPMI index configured in the cell (BWP) is designated, the UE (i) ignores the notification by this field for the cell, (ii) refers to a provision (notification) of a TPMI table (any of 3GPP TS38.212 table 7.3.1.1.2-2/2A/2B/3/3A/4/4A/5/5A) to be referred to by default, (iii) interprets that a default configuration is specified by the 3GPP specification and the configuration is designated by a higher layer, (iv) interprets only LSB or MSB corresponding to the TPMI index for the cell, or (v) may apply the notification by this field only when scheduled for a cell (combination of cells) in which at least any one of the number of Antenna ports configured for each cell included in scheduling cell/set of cells, ul-FullPowerTransmission, configuration of transform precoder, maxRank, codebookSubset, configuration of txConfig, and the referred TPMI table is the same.

- Antenna ports
   ∘ (Opt.1): The UE assumes that the number of bits of the Antenna port field configured for each cell included in the Set of cells is the same.

The UE may assume that the configuration of transform precoder configured for each cell included in the Set of cells, dmrs-TypemaxRank, maxLength, dmrs-UplinkTransformPrecoding, tp-pi2BPSK, txConfig, dmrs-UplinkForPUSCH-MappingTypeA, and configuration of dmrs-UplinkForPUSCH-MappingTypeB are the same among cells.

∘ (Opt.2): If a value larger than the Antenna port value configured in the cell (BWP) is designated, the UE (i) ignores the notification by this field for the cell, (ii) refers to a provision (notification) of an Antenna port configuration table (any of 3GPP TS38.212 table 7.3.1.1.2-6~23) to be referred to by default, (iii) interprets that a default configuration is specified by the 3GPP specification and the configuration is designated by a higher layer, or (iv) interprets only LSB or MSB corresponding to the Antenna port value for the cell, or (v) may apply the notification by this field only when scheduled for a cell (combination of cells) in which at least any one of the configuration of transform precoder configured for each cell included in scheduling cell/set of cells, dmrs-TypemaxRank, maxLength, dmrs-UplinkTransformPrecoding, tp-pi2BPSK, txConfig, dmrs-UplinkForPUSCH-MappingTypeA, configuration of dmrs-UplinkForPUSCH-MappingTypeB, and the referred Antenna port configuration table is the same.

- ChannelAccess-CPext-CAPC
   ∘ (Opt.1): The UE assumes that the number of bits of ChannelAccess-CPext-CAPC configured for each cell included in the Set of cells is the same.

The UE may assume that the number of entries of ul-AccessConfigListDCI-0-1 configured for each cell included in the Set of cells, configuration of channelAccessMode-r16, and ChannelAccessMode2-r17 are the same among cells.

∘ (Opt.2): If a value larger than the ChannelAccess-CPext-CAPC configuration entry index configured in the cell (BWP) is designated, the UE (i) ignores the notification by this field for the cell, (ii) interprets that a default configuration is specified by the 3GPP specification and the configuration is designated by a higher layer, or (iii) interprets only LSB or MSB corresponding to the ChannelAccess-CPext-CAPC configuration entry index for the cell, or (iv) may apply the notification by this field only when scheduled for a cell (combination of cells) in which at least any one of the number of entries of ul-AccessConfigListDCI-0-1 configured for each cell included in scheduling cell/set of cells, configuration of channelAccessMode-r16, and configuration of ChannelAccessMode2-r17 is the same.

- Open-loop power control parameter set indication
   ∘ (Opt.1): The UE assumes that the number of bits of the open loop power control field configured for each cell included in the Set of cells is the same.

The UE may assume that the presence or absence of configuration of p0-PUSCH-SetList configured for each cell included in the Set of cells, the presence or absence of SRS resource indicator field, and the configuration of olpc-ParameterSetDCI-0-1 are the same among cells.

∘ (Opt.2): If a value larger than the Open-loop power control parameter set index configured in the cell (BWP) is designated, the UE (i) ignores the notification by this field for the cell, (ii) interprets that a default configuration is specified by the 3GPP specification and the configuration is designated by a higher layer, or (iii) interprets only LSB or MSB corresponding to the Open-loop power control parameter set index for the cell, or (iv) may apply the notification by this field only when scheduled for a cell (combination of cells) in which at least any one of the presence or absence of configuration of p0-PUSCH-SetList configured for each cell included in scheduling cell/set of cells, the presence or absence of SRS resource indicator field, and the configuration of olpc-ParameterSetDCI-0-1 is the same.

- SCell dormancy indication
   ∘ (Opt.1): The UE assumes that dormancyGroupWithinActiveTime is configured in the scheduling cell or any one cell included in the Set of cells, or is configured commonly for each cell included in the Set of cells.
- PDCCH monitoring adaptation indication
   searchSpaceGroupIdList-r17, pdcch-SkippingDurationList may be assumed to be configured in the scheduling cell or any one cell included in the Set of cells, or configured commonly for each cell included in the Set of cells.
- PDSCH-to-HARQ_feedback timing indicator
   ∘ (Opt.1): The UE assumes that the number of bits of PDSCH-to-HARQ_feedback timing indicator configured for each cell included in the Set of cells is the same.

The UE may assume that the configuration of dL-DataToUL-ACK configured for each cell included in the Set of cells is the same among cells.

∘ (Opt.2): If a value larger than the PDSCH-to-HARQ_feedback timing index configured in the cell (BWP) is designated, the UE (i) ignores the notification by this field for the cell, (ii) interprets that a default configuration is specified by the 3GPP specification and the configuration is designated by a higher layer, or (iii) interprets only LSB or MSB corresponding to the PDSCH-to-HARQ_feedback timing index for the cell.

- Minimum applicable scheduling offset indicator
   ∘ (Opt.1): The UE assumes that the number of bits of minimum applicable scheduling offset indicator configured for each cell included in the set of cells is the same.

The UE may assume that the configuration of minimumSchedulingOffsetK0/ minimumSchedulingOffsetK2 configured for each cell included in the set of cells is the same among cells.

∘ (Opt.2): If minimumSchedulingOffsetK0/ minimumSchedulingOffsetK2 is not configured in the cell (BWP), the UE may ignore the notification by this field for the cell, interpret that a default configuration is specified by the specification or notified from a higher layer and this is designated, or apply the notification by this field only when scheduled for a cell (combination of cells) in which the presence or absence of configuration of minimumSchedulingOffsetK2 configured for each cell included in scheduling cell/set of cells and the presence or absence of configuration of minimumSchedulingOffsetK0 are the same.

- Dynamic waveform switching indicator (transform precoding indicator)
   ∘ (Opt.1): The UE assumes that the number of bits of Dynamic waveform switching indicator (transform precoding indicator) configured for each cell included in the set of cells is the same.

The UE may assume that the configuration of the RRC parameter for configuring that Dynamic waveform switching indicator (transform precoding indicator) configured for each cell included in the set of cells is included in the DCI is the same among cells.

∘ (Opt.2): If the RRC parameter for configuring that Dynamic waveform switching indicator (transform precoding indicator) is included in the DCI is not configured in the cell (BWP), the UE may ignore the notification by this field for the cell, interpret that a default configuration is specified by the specification or notified from a higher layer and this is designated, or apply the notification by this field only when scheduled for a cell (combination of cells) in which the configuration of the presence or absence of the RRC parameter for configuring that Dynamic waveform switching indicator (transform precoding indicator) configured for each cell included in scheduling cell/set of cells is included in the DCI is the same.

According to this operation example, regarding the interpretation of a specific Type-1A field (may include a Type-3 field configured as a Type-1A field) included in DCI format 0_3/1_3, the UE can operate according to any of the above, so that the content of the field can be correctly interpreted even if the DCI field size is different. Thereby, the UE can execute an appropriate operation according to the content of the field included in DCI format 0_3/1_3 in Single DCI Multi-Cell PDSCH/PUSCH scheduling.

### (4) Other Embodiments

Although the embodiments have been described above, it is obvious to those skilled in the art that the present disclosure is not limited to the description of the embodiments, and various modifications and improvements are possible.

For example, in the above-described embodiment, the terms single DCI multi-slot PDSCH/PUSCH scheduling and Single DCI Multi-Cell PDSCH/PUSCH scheduling have been used for description, but these terms may be referred to by other names as long as they mean a function of scheduling PDSCH/PUSCH of a plurality of slots by one DCI and a function of scheduling PDSCH/PUSCH of a plurality of CCs by a single (one) DCI. Further, as described above, the channel is not limited to PDSCH/PUSCH, and a control channel and/or another data channel may be targeted.

In the above-described embodiment, UE capability signaling may be any of Per-UE, Per-FR, Per-TDD/FDD, Per-band, Per-BC (Band Combination), Per-FS (Feature Set), and Per-FSPC (Feature Set Per CC).

The UE 200 may report UE capability for the scheduling CC, or may report UE capability for the scheduled CC. Also, the UE 200 may report UE capability for a CC transmitting PUCCH.

Further, in the above-described embodiment, the description has been made using the terms scheduled cell and co-scheduled cell(s), and the scheduled cell may mean any one cell, and the co-scheduled cell(s) may be interpreted as a plurality of cells scheduled simultaneously, but the scheduled cell and the co-scheduled cell(s) may be used interchangeably.

In the above description, configure, activate, update, indicate, enable, specify, and select may be read interchangeably. Similarly, link, associate, correspond, and map may be read interchangeably, and allocate, assign, monitor, and map may also be read interchangeably.

Furthermore, specific, dedicated, UE-specific, and UE-dedicated may be read interchangeably. Similarly, common, shared, group-common, UE-common, and UE-shared may be read interchangeably.

The block configuration diagram (Fig. 4) used in the description of the above embodiments show blocks of functional units. Those functional blocks (structural components) can be realized by a desired combination of at least one of hardware and software. Means for realizing each functional block is not particularly limited. That is, each functional block may be realized by one device combined physically or logically, or by two or more devices separated physically or logically that are directly or indirectly connected (e.g., wired, wireless, etc.). The functional block may be realized by combining the one device or the plurality of devices with software.

Functions include judging, determining, deciding, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like, but are not limited thereto. For example, a functional block (configuration unit) that functions transmission is referred to as a transmitting unit or a transmitter. In any case, as described above, the realization method is not particularly limited.

Furthermore, the gNB 100 and the UE 200 (the devices) described above may function as a computer that performs processing of the radio communication method of the present disclosure. Fig. 10 is a diagram showing an example of a hardware configuration of the device. As shown in Fig. 10, the device may be configured as a computer device including a processor 1001, a memory 1002, a storage 1003, a communication device 1004, an input device 1005, an output device 1006, a bus 1007, and the like.

Note that in the following description, the term "device" can be read as a circuit, a device, a unit, or the like. The hardware configuration of the device may be configured to include one or a plurality of the devices shown in the figure, or may be configured not to include some of the devices.

Each functional block of the device (see Fig. 4) is realized by any hardware element of the computer device or a combination of the hardware elements.

Further, each function in the device is realized by loading predetermined software (program) on hardware such as the processor 1001 and the memory 1002, so that the processor 1001 performs computation to control communication by the communication device 1004, or to control at least one of reading and writing of data in the memory 1002 and the storage 1003.

The processor 1001, for example, operates an operating system to control the entire computer. The processor 1001 may be composed of a central processing unit (CPU) including an interface with peripheral devices, a control device, an arithmetic device, a register, and the like.

Further, the processor 1001 reads a program (program code), a software module, data, and the like from at least one of the storage 1003 and the communication device 1004 to the memory 1002, and executes various processes according to them. As the program, a program that causes a computer to execute at least a part of the operations described in the above-described embodiment is used. Furthermore, the various processes described above may be executed by one processor 1001, or may be executed simultaneously or sequentially by two or more processors 1001. The processor 1001 may be implemented by one or more chips. Note that the program may be transmitted from a network via a telecommunication line.

The memory 1002 is a computer-readable recording medium, and may be composed of at least one of, for example, a Read Only Memory (ROM), an Erasable Programmable ROM (EPROM), an Electrically Erasable Programmable ROM (EEPROM), a Random Access Memory (RAM), and the like. The memory 1002 may be referred to as a register, a cache, a main memory (main storage device), or the like. The memory 1002 can store a program (program code), a software module, and the like executable to perform the method according to one embodiment of the present disclosure.

The storage 1003 is a computer-readable recording medium, and may be composed of at least one of, for example, an optical disk such as a Compact Disc ROM (CD-ROM), a hard disk drive, a flexible disk, a magneto-optical disk (for example, a compact disk, a digital versatile disk, a Blu-ray (registered trademark) disk), a smart card, a flash memory (for example, a card, a stick, a key drive), a floppy (registered trademark) disk, a magnetic strip, and the like. The storage 1003 may be referred to as an auxiliary storage device. The above-described recording medium may be, for example, a database, a server, or other appropriate media including at least one of the memory 1002 and the storage 1003.

The communication device 1004 is hardware (transmission/reception device) for performing communication between computers via at least one of a wired network and a radio network, and is also referred to as, for example, a network device, a network controller, a network card, a communication module, or the like.

The communication device 1004 may be configured to include a high-frequency switch, a duplexer, a filter, a frequency synthesizer, and the like, for example, in order to realize at least one of Frequency Division Duplex (FDD) and Time Division Duplex (TDD).

The input device 1005 is an input device (for example, a keyboard, a mouse, a microphone, a switch, a button, a sensor, etc.) that accepts input from the outside. The output device 1006 is an output device (for example, a display, a speaker, an LED lamp, etc.) that performs output to the outside. Note that the input device 1005 and the output device 1006 may have an integrated configuration (for example, a touch panel).

Further, each device such as the processor 1001 and the memory 1002 is connected by a bus 1007 for communicating information. The bus 1007 may be configured using a single bus, or may be configured using a different bus for each device.

Furthermore, the device may be configured to include hardware such as a microprocessor, a Digital Signal Processor (DSP), an Application Specific Integrated Circuit (ASIC), a Programmable Logic Device (PLD), and a Field Programmable Gate Array (FPGA), and a part or all of each functional block may be realized by the hardware. For example, the processor 1001 may be implemented using at least one of these hardwares.

Also, notification of information is not limited to the aspect/embodiment described in the present disclosure, and may be performed using other methods. For example, notification of information may be implemented by physical layer signaling (for example, Downlink Control Information (DCI), Uplink Control Information (UCI)), higher layer signaling (for example, RRC signaling, Medium Access Control (MAC) signaling, broadcast information (Master Information Block (MIB), System Information Block (SIB))), other signals, or a combination thereof. Further, RRC signaling may be referred to as an RRC message, and may be, for example, an RRC Connection Setup message, an RRC Connection Reconfiguration message, or the like.

Each aspect/embodiment described in the present disclosure may be applied to at least one of a system using Long Term Evolution (LTE), LTE-Advanced (LTE-A), SUPER 3G, IMT-Advanced, 4th generation mobile communication system (4G), 5th generation mobile communication system (5G), 6th generation mobile communication system (6G), xth generation mobile communication system (xG) (x is, for example, an integer or a decimal), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), and other appropriate systems, and a next-generation system extended based on these. Also, a plurality of systems may be combined (for example, a combination of at least one of LTE and LTE-A and 5G, etc.) and applied.

The processing procedures, sequences, flowcharts, etc. of each aspect/embodiment described in the present disclosure may be reordered as long as there is no contradiction. For example, regarding the method described in the present disclosure, elements of various steps are presented using an exemplary order, and are not limited to the specific order presented.

The specific operation performed by the base station in the present disclosure may be performed by its upper node in some cases. In a network consisting of one or a plurality of network nodes having a base station, it is obvious that various operations performed for communication with a terminal can be performed by at least one of the base station and other network nodes other than the base station (for example, MME or S-GW may be considered, but not limited thereto). Although the case where there is one other network node other than the base station has been illustrated above, it may be a combination of a plurality of other network nodes (for example, MME and S-GW).

Information, signals (information, etc.) may be output from a higher layer (or a lower layer) to a lower layer (or a higher layer). It may be input and output via a plurality of network nodes.

Input and output information may be stored in a specific location (for example, a memory), or may be managed using a management table. Input and output information may be overwritten, updated, or appended. Output information may be deleted. Input information may be transmitted to another device.

Determination may be performed by a value represented by 1 bit (0 or 1), may be performed by a Boolean value (Boolean: true or false), or may be performed by comparison of numerical values (for example, comparison with a predetermined value).

Each aspect/embodiment described in the present disclosure may be used alone, may be used in combination, or may be switched in accordance with execution. Also, notification of predetermined information (for example, notification of "being X") is not limited to being performed explicitly, and may be performed implicitly (for example, not performing notification of the predetermined information).

Software should be broadly interpreted to mean instructions, instruction sets, codes, code segments, program codes, programs, subprograms, software modules, applications, software applications, software packages, routines, subroutines, objects, executable files, execution threads, procedures, functions, etc., regardless of whether it is referred to as software, firmware, middleware, microcode, hardware description language, or other names.

Also, software, instructions, information, etc. may be transmitted and received via a transmission medium. For example, when software is transmitted from a website, a server, or other remote source using at least one of wired technology (coaxial cable, optical fiber cable, twisted pair, Digital Subscriber Line (DSL), etc.) and wireless technology (infrared, microwave, etc.), at least one of these wired technology and wireless technology is included within the definition of the transmission medium.

Information, signals, etc. described in the present disclosure may be represented using any of various different technologies. For example, data, instructions, commands, information, signals, bits, symbols, chips, etc. that may be mentioned throughout the above description may be represented by voltage, current, electromagnetic waves, magnetic fields or magnetic particles, light fields or photons, or any combination thereof.

Note that terms described in the present disclosure and terms necessary for understanding the present disclosure may be replaced with terms having the same or similar meanings. For example, at least one of a channel and a symbol may be a signal (signaling). Also, a signal may be a message. Also, a component carrier (CC) may be referred to as a carrier frequency, a cell, a frequency carrier, or the like.

The terms "system" and "network" used in the present disclosure are used interchangeably.

Also, information, parameters, etc. described in the present disclosure may be represented using absolute values, may be represented using relative values from predetermined values, or may be represented using other corresponding information. For example, radio resources may be indicated by an index.

The names used for the parameters described above are not limiting names in any respect. Furthermore, mathematical formulas and the like using these parameters may differ from those explicitly disclosed in the present disclosure. Since various channels (for example, PUCCH, PDCCH, etc.) and information elements can be identified by any suitable names, various names assigned to these various channels and information elements are not limiting names in any respect.

In the present disclosure, terms such as "Base Station (BS)", "radio base station", "fixed station", "NodeB", "eNodeB (eNB)", "gNodeB (gNB)", "access point", "transmission point", "reception point", "transmission/reception point", "cell", "sector", "cell group", "carrier", and "component carrier" can be used interchangeably. The base station may be referred to by terms such as macro cell, small cell, femto cell, pico cell, and the like.

The base station can accommodate one or a plurality of (for example, three) cells (also referred to as sectors). When the base station accommodates a plurality of cells, the entire coverage area of the base station can be divided into a plurality of smaller areas, and each smaller area can also provide communication services by a base station subsystem (for example, a small base station for indoor use (Remote Radio Head: RRH)).

The term "cell" or "sector" refers to a part or the whole of the coverage area of at least one of the base station and the base station subsystem that performs communication services in this coverage.

In the present disclosure, transmitting information from the base station to the terminal may be read as the base station instructing the terminal to perform control/operation based on the information.

In the present disclosure, terms such as "Mobile Station (MS)", "user terminal", "User Equipment (UE)", and "terminal" can be used interchangeably.

A mobile station may be referred to by those skilled in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms.

At least one of the base station and the mobile station may be referred to as a transmission device, a reception device, a communication device, or the like. Note that at least one of the base station and the mobile station may be a device mounted on a moving body, the moving body itself, or the like. The moving body may be a vehicle (for example, a car, an airplane, etc.), a moving body that moves unmanned (for example, a drone, an autonomous driving car, etc.), or a robot (manned or unmanned). Note that at least one of the base station and the mobile station includes a device that does not necessarily move during communication operation. For example, at least one of the base station and the mobile station may be an Internet of Things (IoT) device such as a sensor.

Also, the base station in the present disclosure may be read as a mobile station (user terminal, hereinafter the same). For example, each aspect/embodiment of the present disclosure may be applied to a configuration in which communication between a base station and a mobile station is replaced with communication between a plurality of mobile stations (for example, may be referred to as Device-to-Device (D2D), Vehicle-to-Everything (V2X), etc.). In this case, the mobile station may have the functions that the base station has. Also, terms such as "uplink" and "downlink" may be read as terms corresponding to inter-terminal communication (for example, "side"). For example, an uplink channel, a downlink channel, etc. may be read as a side channel (or side link).

Similarly, the mobile station in the present disclosure may be read as a base station. In this case, the base station may have the functions that the mobile station has.

A radio frame may be composed of one or a plurality of frames in the time domain. Each of one or a plurality of frames in the time domain may be referred to as a subframe. A subframe may be further composed of one or a plurality of slots in the time domain. A subframe may be a fixed time length (for example, 1 ms) independent of numerology.

Numerology may be a communication parameter applied to at least one of transmission and reception of a certain signal or channel. Numerology may indicate at least one of, for example, SubCarrier Spacing (SCS), bandwidth, symbol length, cyclic prefix length, Transmission Time Interval (TTI), the number of symbols per TTI, radio frame configuration, specific filtering processing performed by a transceiver in the frequency domain, specific windowing processing performed by a transceiver in the time domain, and the like.

A slot may be composed of one or a plurality of symbols (Orthogonal Frequency Division Multiplexing (OFDM) symbols, Single Carrier Frequency Division Multiple Access (SC-FDMA) symbols, etc.) in the time domain. A slot may be a time unit based on numerology.

A slot may include a plurality of mini-slots. Each mini-slot may be composed of one or a plurality of symbols in the time domain. Also, a mini-slot may be referred to as a sub-slot. A mini-slot may be composed of a smaller number of symbols than a slot. PDSCH (or PUSCH) transmitted in a time unit larger than a mini-slot may be referred to as PDSCH (or PUSCH) mapping type A. PDSCH (or PUSCH) transmitted using a mini-slot may be referred to as PDSCH (or PUSCH) mapping type B.

A radio frame, a subframe, a slot, a minislot, and a symbol all represent a time unit when transmitting a signal. A radio frame, a subframe, a slot, a minislot, and a symbol may be referred to by other names corresponding thereto, respectively.

For example, one subframe may be referred to as a Transmission Time Interval (TTI), a plurality of consecutive subframes may be referred to as a TTI, or one slot or one minislot may be referred to as a TTI. That is, at least one of a subframe and a TTI may be a subframe (1 ms) in existing LTE, may be a period shorter than 1 ms (e.g., 1 to 13 symbols), or may be a period longer than 1 ms. Note that the unit representing TTI may be referred to as a slot, a minislot, or the like instead of a subframe.

Here, TTI refers to, for example, the minimum time unit of scheduling in radio communication. For example, in the LTE system, the base station performs scheduling to allocate radio resources (frequency bandwidth, transmission power, etc. that can be used in each user terminal) to each user terminal in units of TTI. Note that the definition of TTI is not limited to this.

TTI may be a transmission time unit of a channel-coded data packet (transport block), code block, code word, etc., or may be a processing unit of scheduling, link adaptation, etc. Note that when TTI is given, the time interval (for example, the number of symbols) to which the transport block, code block, code word, etc. are actually mapped may be shorter than the TTI.

Note that, when one slot or one minislot is referred to as a TTI, one or more TTIs (that is, one or more slots or one or more minislots) may be a minimum time unit of scheduling. Also, the number of slots (number of minislots) constituting the minimum time unit of scheduling may be controlled.

A TTI having a time length of 1 ms may be referred to as a normal TTI (TTI in LTE Rel.8-12), a normal TTI, a long TTI, a normal subframe, a normal subframe, a long subframe, a slot, or the like. A TTI shorter than the normal TTI may be referred to as a shortened TTI, a short TTI, a partial TTI (partial or fractional TTI), a shortened subframe, a short subframe, a mini-slot, a sub-slot, a slot, or the like.

Note that a long TTI (for example, normal TTI, subframe, etc.) may be read as a TTI having a time length exceeding 1 ms, and a short TTI (for example, shortened TTI, etc.) may be read as a TTI having a TTI length less than the TTI length of the long TTI and 1 ms or more.

A resource block (RB) is a resource allocation unit in the time domain and the frequency domain, and may include one or a plurality of consecutive subcarriers in the frequency domain.

The number of subcarriers included in an RB may be the same regardless of numerology, and may be, for example, 12. The number of subcarriers included in an RB may be determined based on numerology.

Also, the time domain of an RB may include one or a plurality of symbols, and may be a length of one slot, one mini-slot, one subframe, or one TTI. One TTI, one subframe, etc. may be composed of one or a plurality of resource blocks, respectively.

Note that one or a plurality of RBs may be referred to as a Physical Resource Block (Physical RB: PRB), a Sub-Carrier Group (SCG), a Resource Element Group (REG), a PRB pair, an RB pair, or the like.

Also, a resource block may be composed of one or a plurality of resource elements (Resource Element: RE). For example, one RE may be a radio resource region of one subcarrier and one symbol.

A Bandwidth Part (BWP) (may be referred to as a partial bandwidth, etc.) may represent a subset of consecutive common RBs (common resource blocks) for a certain numerology in a certain carrier. Here, the common RB may be identified by an index of RB based on a common reference point of the carrier. A PRB may be defined in a certain BWP and numbered within the BWP.

The BWP may include BWP for UL (UL BWP) and BWP for DL (DL BWP). One or a plurality of BWPs may be configured for a UE within one carrier.

At least one of the configured BWPs may be active, and the UE may not assume transmitting or receiving a predetermined signal/channel outside the active BWP. Note that "cell", "carrier", and the like in the present disclosure may be read as "BWP".

The structures of the radio frame, subframe, slot, minislot, symbol, and the like described above are merely examples. For example, configurations such as the number of subframes included in a radio frame, the number of slots per subframe or radio frame, the number of minislots included in a slot, the number of symbols and RBs included in a slot or a minislot, the number of subcarriers included in an RB, and the number of symbols, symbol length, Cyclic Prefix (CP) length, and the like in a TTI can be changed in various ways.

The terms "connected", "coupled", or any variation thereof mean any direct or indirect connection or coupling between two or more elements, and can include the presence of one or more intermediate elements between two elements "connected" or "coupled" to each other. The coupling or connection between elements may be physical, logical, or a combination thereof. For example, "connection" may be read as "access". As used in the present disclosure, two elements can be considered to be "connected" or "coupled" to each other using at least one of one or more wires, cables, and printed electrical connections, and as some non-limiting and non-inclusive examples, using electromagnetic energy having wavelengths in a radio frequency region, a microwave region, and a light (both visible and invisible) region, and the like.

The Reference Signal can be abbreviated as RS, and may be referred to as a Pilot according to the standard applied.

The description "based on" used in the present disclosure does not mean "based only on" unless explicitly stated otherwise. In other words, the description "based on" means both "based only on" and "based at least on".

"Means" in the configuration of each device described above may be replaced with "unit", "circuit", "device", or the like.

Any reference to elements using designations such as "first", "second", etc. used in the present disclosure does not generally limit the quantity or order of those elements. These designations can be used in the present disclosure as a convenient method for distinguishing between two or more elements. Therefore, references to the first and second elements do not mean that only two elements can be adopted there, or that the first element must precede the second element in some way.

In the present disclosure, when "include", "including", and variations thereof are used, these terms are intended to be inclusive, similar to the term "comprising". Furthermore, the term "or" used in the present disclosure is intended not to be an exclusive OR.

In the present disclosure, when articles are added by translation, for example, a, an, and the in English, the present disclosure may include that nouns following these articles are plural.

Terms "determining" and "deciding" used in the present disclosure may encompass a wide variety of operations. "Determining" and "deciding" may include, for example, regarding judging, calculating, computing, processing, deriving, investigating, looking up, search, inquiry (e.g., searching in a table, a database, or another data structure), or ascertaining as "determining" or "deciding". Also, "determining" and "deciding" may include regarding receiving (e.g., receiving information), transmitting (e.g., transmitting information), input, output, or accessing (e.g., accessing data in a memory) as "determining" or "deciding". Also, "determining" and "deciding" may include regarding resolving, selecting, choosing, establishing, comparing, or the like as "determining" or "deciding". That is, "determining" and "deciding" may include regarding some operation as "determining" or "deciding". Also, "determining (deciding)" may be read as "assuming", "expecting", "considering", or the like.

In the present disclosure, the term "A and B are different" may mean "A and B are different from each other". Note that the term may mean "A and B are different from C, respectively". Terms such as "separate", "coupled", etc. may be interpreted similarly to "different".

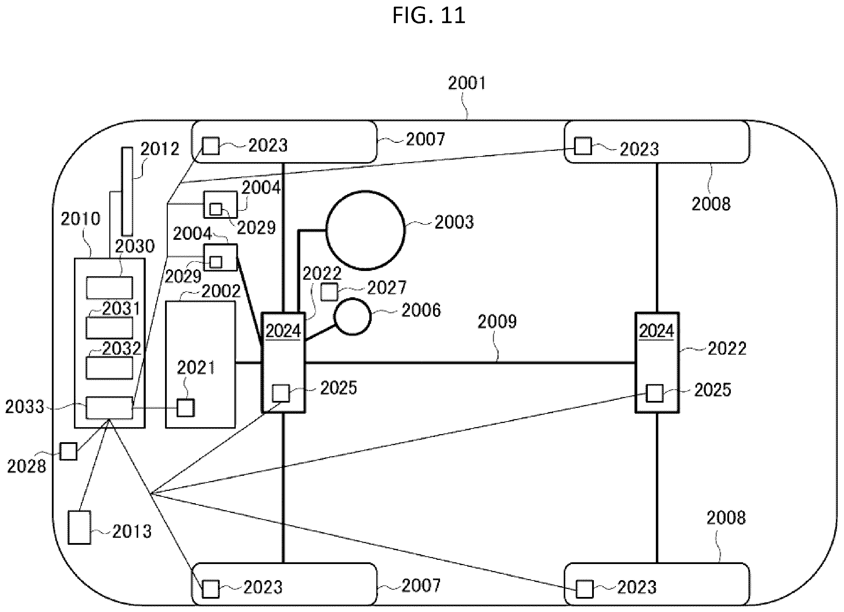

Fig. 11 shows a configuration example of a vehicle 2001. As shown in Fig. 11, the vehicle 2001 includes a drive unit 2002, a steering unit 2003, an accelerator pedal 2004, a brake pedal 2005, a shift lever 2006, left and right front wheels 2007, left and right rear wheels 2008, an axle 2009, an electronic control unit 2010, various sensors 2021 to 2029, an information service unit 2012, and a communication module 2013.

The drive unit 2002 is composed of, for example, an engine, a motor, or a hybrid of an engine and a motor. The steering unit 2003 includes at least a steering wheel (also referred to as a handle), and is configured to steer at least one of the front wheels and the rear wheels based on the operation of the steering wheel operated by a user. The electronic control unit 2010 is composed of a microprocessor 2031, a memory (ROM, RAM) 2032, and a communication port (IO port) 2033. Signals from various sensors 2021 to 2027 provided in the vehicle are input to the electronic control unit 2010. The electronic control unit 2010 may be referred to as an ECU (Electronic Control Unit).

Signals from the various sensors 2021 to 2028 include a current signal from a current sensor 2021 that senses the current of the motor, a rotational speed signal of the front wheels and rear wheels acquired by a rotational speed sensor 2022, an air pressure signal of the front wheels and rear wheels acquired by an air pressure sensor 2023, a vehicle speed signal acquired by a vehicle speed sensor 2024, an acceleration signal acquired by an acceleration sensor 2025, an accelerator pedal depression amount signal acquired by an accelerator pedal sensor 2029, a brake pedal depression amount signal acquired by a brake pedal sensor 2026, a shift lever operation signal acquired by a shift lever sensor 2027, a detection signal for detecting an obstacle, a vehicle, a pedestrian, etc. acquired by an object detection sensor 2028, and the like.

The information service unit 2012 is composed of various devices for providing (outputting) various information such as driving information, traffic information, entertainment information, etc., such as a car navigation system, an audio system, a speaker, a television, a radio, and one or more ECUs for controlling these devices. The information service unit 2012 uses information acquired from an external device via the communication module 2013 or the like to provide various multimedia information and multimedia services to the occupants of the vehicle 1.

The information service unit 2012 may include an input device (for example, a keyboard, a mouse, a microphone, a switch, a button, a sensor, a touch panel, etc.) that accepts input from the outside, or may include an output device (for example, a display, a speaker, an LED lamp, a touch panel, etc.) that performs output to the outside.

The driving assistance system unit 2030 is composed of various devices for providing functions for preventing accidents in advance and reducing the driving load of the driver, such as a millimeter wave radar, LiDAR (Light Detection and Ranging), a camera, a positioning locator (for example, GNSS, etc.), map information (for example, High Definition (HD) map, Autonomous Vehicle (AV) map, etc.), a gyro system (for example, IMU (Inertial Measurement Unit), INS (Inertial Navigation System), etc.), an AI (Artificial Intelligence) chip, an AI processor, and one or more ECUs for controlling these devices. Also, the driving assistance system unit 2030 transmits and receives various information via the communication module 2013 to realize a driving assistance function or an autonomous driving function.

The communication module 2013 can communicate with the microprocessor 2031 and the components of the vehicle 1 via the communication port. For example, the communication module 2013 transmits and receives data via the communication port 2033 to and from the drive unit 2002, the steering unit 2003, the accelerator pedal 2004, the brake pedal 2005, the shift lever 2006, the left and right front wheels 2007, the left and right rear wheels 2008, the axle 2009, the microprocessor 2031 and the memory (ROM, RAM) 2032 in the electronic control unit 2010, and the sensors 2021 to 2028 provided in the vehicle 2001.

The communication module 2013 is a communication device capable of being controlled by the microprocessor 2031 of the electronic control unit 2010 and capable of communicating with an external device. For example, it transmits and receives various information via radio communication to and from an external device. The communication module 2013 may be inside or outside the electronic control unit 2010. The external device may be, for example, a base station, a mobile station, or the like.

The communication module 2013 may transmit at least one of the signals from the various sensors 2021 to 2028 input to the electronic control unit 2010 described above, information obtained based on the signals, and information based on input from the outside (user) obtained via the information service unit 2012 to an external device via radio communication. The electronic control unit 2010, the various sensors 2021 to 2028, the information service unit 2012, etc. may be referred to as an input unit that accepts input. For example, the PUSCH transmitted by the communication module 2013 may include information based on the input.

The communication module 2013 receives various information (traffic information, signal information, inter-vehicle information, etc.) transmitted from an external device, and displays it on the information service unit 2012 provided in the vehicle. The information service unit 2012 may be referred to as an output unit that outputs information (for example, outputs information to a device such as a display or a speaker based on PDSCH received by the communication module 2013 (or data/information decoded from the PDSCH)). Also, the communication module 2013 stores various information received from an external device in the memory 2032 usable by the microprocessor 2031. Based on the information stored in the memory 2032, the microprocessor 2031 may control the drive unit 2002, steering unit 2003, accelerator pedal 2004, brake pedal 2005, shift lever 2006, left and right front wheels 2007, left and right rear wheels 2008, axle 2009, sensors 2021 to 2028, etc. provided in the vehicle 2001.

### (Supplementary Note)

The above disclosure may be expressed as follows.

A first feature is a terminal comprising: a reception unit that receives single downlink control information instructing scheduling targeting a combination of a plurality of cells; and a control unit that assumes that different field sizes are applied among the plurality of cells targeting any field included in the downlink control information, wherein the control unit assumes that the field is applied when scheduling is performed for a cell for which a higher layer parameter is configured.

A second feature is the terminal according to the first feature, wherein the control unit assumes that application of the field is excluded when scheduling is performed for a cell for which the higher layer parameter is not configured.

A third feature is the terminal according to the first or second feature, wherein the control unit assumes that the field is applied when scheduling is performed for a combination of cells for which the higher layer parameter is configured.

Although the present disclosure has been described in detail above, it is obvious to those skilled in the art that the present disclosure is not limited to the embodiments described in the present disclosure. The present disclosure can be implemented as modifications and variations without departing from the spirit and scope of the present disclosure as defined by the description of the scope of claims. Therefore, the description of the present disclosure is for the purpose of illustration and explanation, and does not have any restrictive meaning to the present disclosure.

### DESCRIPTION OF REFERENCE NUMERALS

10 Radio communication system
20 NG-RAN
100 gNB
200 UE
210 Radio signal transmission/reception unit
220 Amplifier unit
230 Modulation/demodulation unit
240 Control signal/reference signal processing unit
250 Encoding/decoding unit
260 Data transmission/reception unit
270 Control unit
1001 Processor
1002 Memory
1003 Storage
1004 Communication device
1005 Input device
1006 Output device
1007 Bus
2001 Vehicle
2002 Drive unit
2003 Steering unit
2004 Accelerator pedal
2005 Brake pedal
2006 Shift lever
2007 Left and right front wheels
2008 Left and right rear wheels
2009 Axle
2010 Electronic control unit
2012 Information service unit
2013 Communication module
2021 Current sensor
2022 Rotation speed sensor
2023 Air pressure sensor
2024 Vehicle speed sensor
2025 Acceleration sensor
2026 Brake pedal sensor
2027 Shift lever sensor
2028 Object detection sensor
2029 Accelerator pedal sensor
2030 Driving assistance system unit
2031 Microprocessor
2032 Memory (ROM, RAM)
2033 Communication port

## Claims

1. A terminal comprising:
a reception unit that receives single downlink control information instructing scheduling targeting a combination of a plurality of cells; and
a control unit that assumes that different field sizes are applied among the plurality of cells targeting any field included in the downlink control information, wherein
the control unit assumes that the field is applied when scheduling is performed for a cell for which a higher layer parameter is configured.

2. The terminal according to claim 1, wherein the control unit assumes that application of the field is excluded when scheduling is performed for a cell for which the higher layer parameter is not configured.

3. The terminal according to claim 1, wherein the control unit assumes that the field is applied when scheduling is performed for a combination of cells for which the higher layer parameter is configured.

4. A radio communication method in a terminal, the method comprising the steps of:
a step of receiving single downlink control information instructing scheduling targeting a combination of a plurality of cells;
a step of assuming that different field sizes are applied among the plurality of cells targeting a field included in the downlink control information; and
a step of assuming that the field is applied when scheduling is performed for a cell for which a higher layer parameter is configured.
